# FASCICULE DE BREVET EUROPEEN

(11) **EP 2 575 571 B1**
(45) Date de publication et mention de la délivrance du brevet: **24.09.2014**
(21) Numéro de dépôt: 11726909.2
(22) Date de dépôt: 26.05.2011
(51) Int. Cl.: A47J 31/44

(54) **DISPOSITIF DE PRESENTATION DE CAPSULES ET PROCEDE DE PRESENTATION CORRESPONDANT**
VORRICHTUNG ZUR PRÄSENTATION VON KAPSELN UND ZUGEHÖRIGES PRÄSENTATIONSVERFAHREN
DEVICE FOR PRESENTING CAPSULES AND CORRESPONDING PRESENTATION METHOD

(30) Priorité: 27.05.2010 FR 1054120
(43) Date de publication de la demande: 10.04.2013
(73) Titulaire: Applymage, 69003 Lyon (FR)
(72) Inventeur: BAILLY, Laurent, Paul, Philippe, F-69003 Lyon (FR)
(74) Mandataire: Martin, Didier Roland Valéry
(86) Numéro de dépôt international: PCT/FR2011/051206
(87) Numéro de publication internationale: WO 2011/148108

(56) Documents cités:
- EP-A1- 2 218 365
- DE-U1-202006 019 221
- US-A- 2 633 323
- ANONYMOUS: "Xavax Pendolare II Coffee Capsule Rack for Nespresso", , 12 mai 2010 (2010-05-12), XP002648052, Extrait de l'Internet: URL:http://www.amazon.co.uk/Xavax-Pendolar e-Coffee-Capsule-Nespresso/dp/B0038NX8CS/r ef=sr_1_1?ie=UTF8&qid=1309945282&sr=1-1 [extrait le 2011-07-05]
- ANONYMOUS: "Brabantia Dispenser for Nespresso Coffee Capsules", , 26 mars 2009 (2009-03-26), XP002648053, Extrait de l'Internet: URL:http://www.amazon.co.uk/Brabantia-Disp enser-Nespresso-Coffee-Capsules/dp/B0023NU 5B6/ref=sr_1_1?ie=UTF8&qid=1309946344&sr=1 -1 [extrait le 2011-07-05]

## Description

### DOMAINE TECHNIQUE

La présente invention se rapporte au domaine technique général de la présentation d'objets de la vie courante, en particulier dans un but esthétique et/ou pratique.

La présente invention se rapporte plus particulièrement au domaine technique de la présentation de contenants alimentaires, par exemple de capsules pour boissons chaudes ou froides.

La présente invention concerne plus précisément un dispositif de présentation d'au moins une capsule destinée à être saisie par un utilisateur et contenant un produit alimentaire destiné à la consommation humaine, ledit dispositif de présentation comprenant au moins un premier élément de présentation conçu pour retenir ladite capsule, ledit premier élément de présentation comprenant au moins une première fente de retenue définie par deux bords latéraux qui délimitent un premier espace évasé d'introduction de ladite capsule et un deuxième espace de retenue de ladite capsule, ledit deuxième espace de retenue présentant des dimensions sensiblement inférieures à celles du premier espace évasé, afin que ladite capsule soit maintenue, après son introduction, entre lesdits deux bords latéraux du deuxième espace de retenue, ledit dispositif de présentation comprenant également un socle conçu pour reposer de manière stable sur un support et destiné à maintenir le premier élément de présentation dans une première position de présentation.

La présente invention concerne par ailleurs un procédé de présentation d'au moins une capsule destinée à être saisie par un utilisateur et contenant un produit alimentaire destiné à la consommation humaine, ledit procédé mettant en oeuvre un dispositif de présentation comprenant au moins un premier élément de présentation conçu pour retenir ladite capsule, ledit premier élément de présentation comprenant au moins une première fente de retenue définie par deux bords latéraux qui délimitent un premier espace évasé d'introduction au niveau duquel on introduit ladite capsule et un deuxième espace de retenue de ladite capsule, ledit deuxième espace de retenue présentant des dimensions sensiblement inférieures à celles du premier espace évasé, afin que ladite capsule soit maintenue, après son introduction, entre lesdits deux bords latéraux du deuxième espace de retenue, ledit dispositif de présentation comprenant également un socle conçu pour reposer de manière stable sur un support et destiné à maintenir le premier élément de présentation dans une première position de présentation.

### TECHNIQUE ANTERIEURE

Il est désormais classique d'avoir recours à des capsules ou dosettes individuelles pour la réalisation de boissons chaudes ou froides, par exemple de type café, thé, cappuccino, chocolat chaud ou froid, ...On connaît différents types de capsules dont les dimensions, la forme et le matériau de réalisation sont susceptibles de varier en fonction principalement du produit qu'elles contiennent et de la machine dans laquelle elles sont destinées à fonctionner.

On connaît par exemple les capsules en aluminium, en matière plastique ou en amidon biodégradable, de forme sensiblement cylindrique et fermées par un opercule débordant, en particulier les capsules en forme de chapeau contenant du café. Ces dernières, qui comprennent parfois des micro-perforations, sont conçues pour être d'une part introduites dans une machine, et d'autre part percées ou non par cette dernière, afin de réaliser la boisson correspondante.

Pour une même forme de capsules, il est commun de trouver une grande variété de parfums différents, le plus souvent identifiables par des couleurs ou des décors de différents apposés sur les capsules. Il s'avère donc généralement nécessaire de ranger de manière plus ou moins ordonnée les capsules, afin de trouver facilement le parfum souhaité.

A cette fin, on connait différents systèmes de stockage et de présentation de capsules permettant notamment d'entreposer les capsules par série de même parfum. Par exemple, on connaît des présentoirs constitués de plusieurs rails métalliques entre lesquels sont retenues les capsules. Ces rails sont souvent disposés deux à deux de manière verticale, sur un support. Les capsules sont introduites entre deux rails, au niveau de leur extrémité supérieure, et glissent ensuite par gravité entre les rails pour s'empiler. Il suffit à l'utilisateur de saisir une capsule et de la faire remonter par glissement le long des rails pour pouvoir la libérer du présentoir.

Selon les différents modèles de présentoirs, les rails sont organisés de manière différente, de sorte que le présentoir prend une forme générale sensiblement plate, ou triangulaire ou parallélépipédique.

Toutefois, bien qu'ils permettent une identification et une manipulation simples et pratiques des capsules, ces présentoirs n'en présentent pas moins certains inconvénients.

En effet, ces présentoirs sont parfois encombrants car ils comprennent un grand nombre de rails, en raison de la grande variété des parfums existants. Par conséquent, ils nécessitent une place non négligeable pour leur utilisation. En outre, leur taille et leur forme ne leur permettent pas toujours d'être facilement manipulés et déposés par exemple sur une table en vue d'une présentation simple et peu encombrante des capsules aux différents consommateurs.

Par ailleurs, ces présentoirs nécessitent un support plat et stable pour qu'ils puissent reposer de manière fiable.

En outre, les rails de ces présentoirs ne permettent pas toujours un maintien efficace des capsules et ces dernières peuvent parfois s'échapper des rails. En effet, le simple fait de manipuler certaines capsules maintenues dans les rails peut parfois provoquer des secousses suffisantes pour entraîner le détachement intempestif d'autres capsules. Il est également possible que, lors du déplacement du présentoir, l'utilisateur applique un léger mouvement à ce dernier, ce qui peut dans certains cas provoquer l'éjection des capsules des rails.

Un dispositif et un procédé de présentation d'au moins une capsule selon l'art antérieur est par exemple décrit dans le document EP 2 218 365 A1.

### EXPOSE DE L'INVENTION

Les objets assignés à la présente invention visent en conséquence à remédier aux différents inconvénients énumérés précédemment, et à proposer un nouveau dispositif de présentation de capsules qui assure un maintien stable des capsules et qui soit facilement manipulable et déplaçable, tout en garantissant une présentation optimale des capsules.

Un autre objet de l'invention vise à proposer un nouveau dispositif de présentation de capsules qui permette une présentation efficace, modulable et pratique des capsules.

Un autre objet de l'invention vise à proposer un nouveau dispositif de présentation de capsules qui soit multipostions et multifonctions.

Un autre objet de l'invention vise à proposer un nouveau dispositif de présentation de capsules qui mette en oeuvre des mécanismes simples.

Un autre objet de l'invention vise à proposer un nouveau dispositif de présentation de capsules qui garantisse une excellente tenue des capsules et qui soit particulièrement peu encombrant.

Un autre objet de l'invention vise à proposer un nouveau dispositif de présentation de capsules qui assure une présentation fiable des capsules.

Un autre objet de l'invention vise à proposer un nouveau dispositif de présentation de capsules qui permette une présentation simple d'un grand nombre de capsules.

Un autre objet de l'invention vise à proposer un nouveau dispositif de présentation de capsules qui utilise des matériaux résistants, facilement disponibles et peu onéreux.

Un autre objet de l'invention vise à proposer un nouveau dispositif de présentation de capsules qui utilise des matériaux recyclables, respectueux de l'environnement.

Un autre objet de l'invention vise à proposer un nouveau procédé de présentation de capsules qui assure un maintien stable des capsules et qui soit facile et pratique à mettre en oeuvre, tout en garantissant une présentation optimale des capsules.

Les objets assignés à la présente invention sont atteints à l'aide d'un dispositif de présentation d'au moins une capsule destinée à être saisie par un utilisateur et contenant un produit alimentaire destiné à la consommation humaine, ledit dispositif de présentation comprenant au moins un premier élément de présentation conçu pour retenir ladite capsule, ledit premier élément de présentation comprenant au moins une première fente de retenue définie par deux bords latéraux qui délimitent un premier espace évasé d'introduction de ladite capsule et un deuxième espace de retenue de ladite capsule, ledit deuxième espace de retenue présentant des dimensions sensiblement inférieures à celles du premier espace évasé, afin que ladite capsule soit maintenue, après son introduction, entre lesdits deux bords latéraux du deuxième espace de retenue, ledit dispositif de présentation comprenant également un socle conçu pour reposer de manière stable sur un support et destiné à maintenir le premier élément de présentation dans une première position de présentation, ledit dispositif de présentation étant caractérisé en ce qu'il comprend un élément de support conçu pour être relié audit socle et sur lequel est solidarisé de manière amovible ledit premier élément de présentation par au moins un élément de solidarisation / désolidarisation rapide, de manière à ce que ledit élément de support exerce une fonction de retenue de ladite capsule dans ladite première fente de retenue.

Les objets assignés à l'invention sont également atteints à l'aide d'un procédé de présentation d'au moins une capsule destinée à être saisie par un utilisateur et contenant un produit alimentaire destiné à la consommation humaine, ledit procédé mettant en oeuvre un dispositif de présentation comprenant au moins un premier élément de présentation conçu pour retenir ladite capsule, ledit premier élément de présentation comprenant au moins une première fente de retenue définie par deux bords latéraux qui délimitent un premier espace évasé d'introduction au niveau duquel on introduit ladite capsule et un deuxième espace de retenue de ladite capsule, ledit deuxième espace de retenue présentant des dimensions sensiblement inférieures à celles du premier espace évasé, afin que ladite capsule soit maintenue, après son introduction, entre lesdits deux bords latéraux du deuxième espace de retenue, ledit dispositif de présentation comprenant également un socle conçu pour reposer de manière stable sur un support et destiné à maintenir le premier élément de présentation dans une première position de présentation, ledit procédé de présentation étant caractérisé en ce qu'il comprend une étape de liaison d'un élément de support audit socle et une étape de solidarisation amovible du premier élément de présentation sur ledit élément de support par au moins un élément de solidarisation / désolidarisation rapide, de manière à ce que ledit élément de support exerce une fonction de retenue de ladite capsule dans ladite première fente de retenue.

### DESCRIPTIF SOMMAIRE DES DESSINS

D'autres objets et avantages de l'invention apparaîtront mieux à la lecture de la description ci-après, ainsi qu'à l'aide des dessins annexés, donnés à titre purement illustratif et non limitatif, dans desquels
- la figure 1 illustre, selon une vue partiellement éclatée en perspective de face, un dispositif de présentation conforme à la présente invention comprenant un socle, un élément de support et un premier élément de présentation.
- la figure 2 illustre, selon une vue éclatée en perspective de face, un dispositif de présentation conforme à la présente invention comprenant un socle, un élément de support ainsi qu'un premier et un deuxième éléments de présentation.
- la figure 3 illustre, selon une vue schématique en perspective de profil, le dispositif de présentation de la figure 2 assemblé et comprenant des capsules, conformément à la présente invention.
- la figure 4 illustre, selon une vue schématique en perspective de profil, le dispositif de présentation de la figure 3 sans capsules.
- la figure 5 illustre, selon une vue schématique de face, un deuxième mode de réalisation de l'élément de support conforme à la présente invention.
- la figure 6 illustre, selon une vue schématique de face, un troisième mode de réalisation de l'élément de support conforme à la présente invention.
- la figure 7 illustre, selon une vue schématique partiellement éclatée, un deuxième mode de réalisation du dispositif de présentation de l'invention dans lequel est intégré un moyen d'éclairage.
- la figure 8 illustre, selon une vue schématique de face, un troisième mode de réalisation du dispositif de présentation de l'invention dans lequel est ménagée une ouverture de préhension.
- la figure 9 illustre, selon une vue schématique de face, un quatrième mode de réalisation du dispositif de présentation de l'invention qui comprend un moyen de basculement de l'élément de support.
- la figure 10 illustre, selon une vue schématique de face, le dispositif de présentation de la figure 9 dans lequel l'élément de support est basculé en position horizontale.
- la figure 11 illustre, selon une vue schématique en perspective de face, un mode de réalisation préférentiel de la capsule utilisée dans le dispositif de présentation de l'invention.
- la figure 12 illustre, selon une vue schématique de face, un cinquième mode de réalisation du dispositif de présentation de l'invention qui comprend un moyen de mise en rotation du socle.
- la figure 13 illustre, selon une vue schématique de face, un sixième mode de réalisation du dispositif de présentation de l'invention, assemblé et partiellement désassemblé, utilisable dans trois configurations distinctes (avec socle ou non, avec plaque de support ou non), dans lequel les fentes de retenue des plaques de présentation ont des formes différentes.
- la figure 14 illustre, selon une vue schématique de face, un élément de présentation du dispositif de présentation dans lequel chaque fente de retenue comprend à chacune de ses extrémités deux espaces évasés d'introduction et/ou de sortie des capsules.
- la figure 15 illustre, selon une vue schématique de face, le dispositif de présentation de la figure 3, dans lequel les première et deuxième plaques de présentation sont partiellement détachées de l'élément de support et retenues sur ce dernier uniquement au niveau d'un des bords latéraux du dispositif de présentation, un document étant inséré entre les plaques de présentation.
- la figure 16 illustre, selon une vue schématique de face, le dispositif de présentation de la figure 3, dans lequel les première et deuxième plaques de présentation sont partiellement détachées de l'élément de support et retenues sur ce dernier uniquement à proximité du socle du dispositif de présentation, lesdites plaques ayant des fentes de retenue de nature différente.
- la figure 17 illustre, selon une vue schématique de profil, le dispositif de présentation de la figure 3 lorsque l'élément de support et le premier élément de présentation sont détachés du socle, afin que l'utilisateur puisse présenter les capsules.
- la figure 18 illustre, selon une vue schématique de profil, le dispositif de présentation de la figure 3 dans lequel sont introduites des capsules.

### MEILLEURE MANIERE DE REALISER L'INVENTION

La présente invention concerne un dispositif de présentation 1 d'au moins une capsule 2 destinée à être saisie, de préférence manuellement, par un utilisateur et contenant un produit alimentaire destiné à la consommation humaine. Le dispositif de présentation 1 de l'invention constitue avantageusement un dispositif de présentation et de distribution d'une pluralité de capsules 2 destinées à la réalisation de boissons consommables. Il est avantageusement conçu pour exposer, stocker et/ou distribuer au moins une capsule 2, c'est-à-dire préférentiellement une dosette individuelle destinée à être utilisée pour la préparation de boissons chaudes ou froides, par exemple de café, de thé, de lait en poudre ou liquide, de cappuccino, etc.

De manière avantageuse, la capsule 2 est de petite taille, tient dans la main de l'utilisateur, et est conçue pour fonctionner dans des machines de préparation de boissons individuelles. La capsule 2 présente une forme générale qui est sensiblement celle d'un corps cylindrique 2A recouvert d'un opercule de fermeture débordant 2B de forme sensiblement circulaire ou sensiblement triangulaire. Par exemple, la capsule 2 présente une forme de chapeau, sensiblement identique à celles des capsules 2 à café des sociétés Nespresso®, E.C.C. (Ethical Coffee Company) ou SARA LEE CORPORATION, et est réalisée intégralement en aluminium ou à base d'amidon biodégradable ou en matière plastique. La capsule 2 présente avantageusement une hauteur sensiblement comprise 0,5 et 10 cm, de préférence sensiblement comprise entre 1 et 5 cm, de préférence sensiblement égale à 3 cm et une largeur sensiblement comprise entre 1 et 10 cm, de préférence variant entre 2,4 cm et 3,6 cm pour le corps cylindrique 2A et sensiblement égale à 3,7 cm pour l'opercule 2B.

Alternativement, la capsule 2 présente une autre forme, géométrique ou non, par exemple une forme triangulaire sensiblement identique à celle des capsules de thé ou de lait commercialisées par la société Nestté® (par exemple Special.T ® ou Babynes®). De préférence, le dispositif de présentation 1 est conçu pour la présentation et la distribution d'une pluralité de capsules 2, de types, de formes et/ou de natures différents ou non.

Il est également possible que la capsule 2 comprenne des micro-perforations (non représentées) sur l'opercule 2B, de manière à faciliter la préparation de la boisson correspondante, en particulier dans le cas des capsules réalisées en matière plastique.

Dans un mode de réalisation préféré de l'invention, le dispositif de présentation 1 est un distributeur multifonction de capsules 2 de type dosettes de café et/ou de thé et/ou lait, conçu pour avantageusement remplir des fonctions de stockage, de distribution et de présentation des capsules 2.

Le dispositif de présentation 1 comprend au moins un premier élément de présentation 3 conçu pour retenir ladite capsule 2, c'est-à-dire capable de maintenir la capsule 2 sur le dispositif 1. Ledit premier élément de présentation 3 comprend au moins une première fente de retenue 4 définie par deux bords latéraux 4A, 4B qui délimitent un premier espace 5 évasé d'introduction de ladite capsule 2 et un deuxième espace 6 de retenue de ladite capsule 2.

Le deuxième espace 6 de retenue présente des dimensions sensiblement inférieures à celles du premier espace 5 évasé, afin que ladite capsule 2 soit maintenue, après son introduction, entre lesdits deux bords latéraux 4A, 4B du deuxième espace de retenue 6. En d'autres termes, la capsule 2 est insérée dans la fente de retenue 4 par le premier espace 5 dont la forme est sensiblement complémentaire de celle de l'opercule 2B de la capsule 2, puis elle est glissée, par exemple manuellement, entre les bords latéraux 4A, 4B de l'espace de retenue 6. Dans le deuxième espace 6, les bords latéraux 4A, 4B formant guides sont avantageusement en contact avec le corps cylindrique 2A de ladite capsule 2, afin de maintenir cette dernière sur le premier élément de présentation 3.

Tel qu'illustré aux figures, ladite fente de retenue 4 a une forme sensiblement allongée, de préférence une forme géométrique, ledit premier espace 5 présentant préférentiellement une forme sensiblement circulaire tandis que le deuxième espace 6 présente une forme sensiblement rectangulaire. La fente de retenue 4 présente avantageusement une longueur L4 sensiblement comprise entre 10 et 50 cm, de préférence sensiblement comprise 20 et 30 cm, de préférence sensiblement égale à 23,3 cm, et une largeur 14 sensiblement comprise entre 1 et 30 cm, de préférence sensiblement comprise entre 1 et 10 cm, de préférence sensiblement égale à 4 cm au niveau du premier espace 5 et sensiblement égale à 3 cm au niveau du deuxième espace 6.

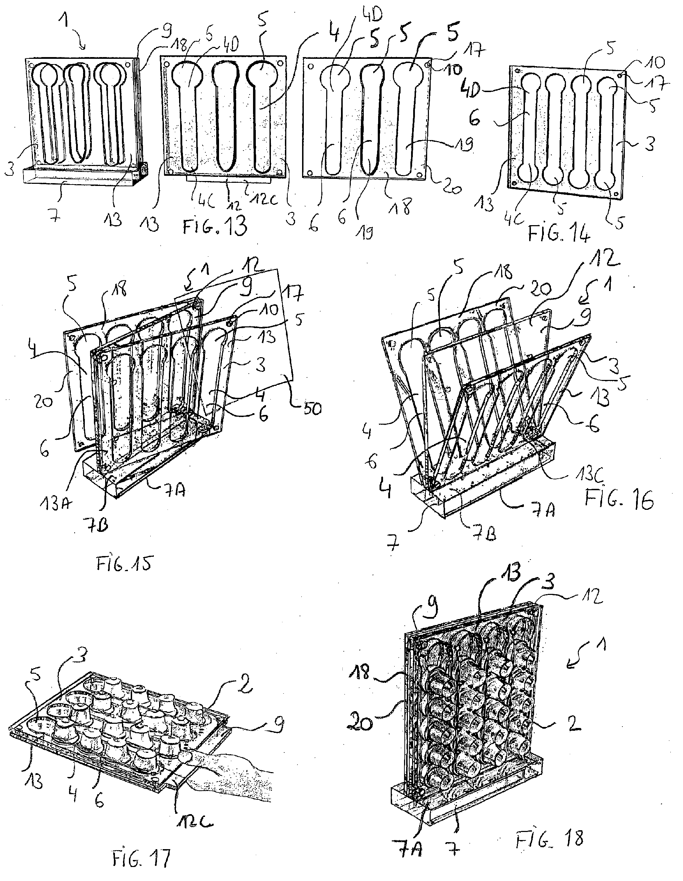

Dans un autre mode de réalisation, il est également envisageable que la première fente de retenue 4 comprenne deux premiers espaces évasés 5, ménagés préférentiellement à chacune des deux extrémités 4C, 4D de ladite fente de retenue 4 respectivement, tel qu'illustré à la figures 14, de telle sorte que les capsules 2 puissent être introduites et/ou retirées de ladite fente de retenue 4 dans l'un ou l'autre desdits premiers espaces évasés 5. Dans ce mode de réalisation, la fente de retenue 4 garantit ainsi avantageusement un double sens d'entrée et de sortie des capsules 2.

De préférence, ladite première fente de retenue 4 est conçue pour retenir plusieurs capsules 2 entre les deux bords latéraux 4A, 4B du deuxième espace de retenue 6, préférentiellement au moins cinq ou six capsules, qui sont introduites par le premier espace 5 puis empilées ou serrées les unes des autres dans le deuxième espace 6, afin de former une ligne sensiblement horizontale ou une colonne sensiblement verticale de capsules 2, selon l'orientation de la fente de retenue 4 (cf. figure 18).

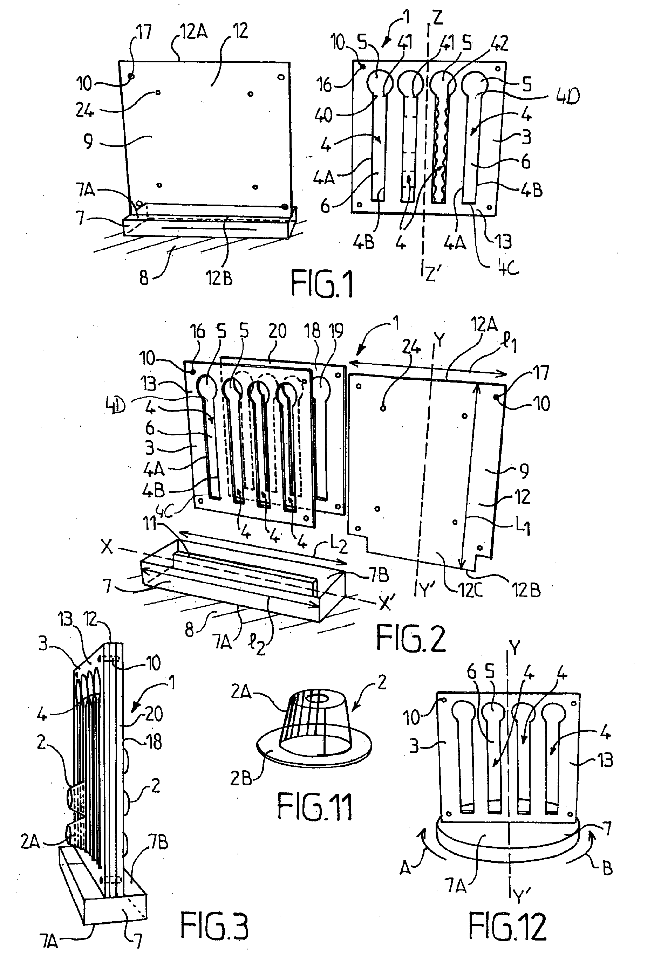

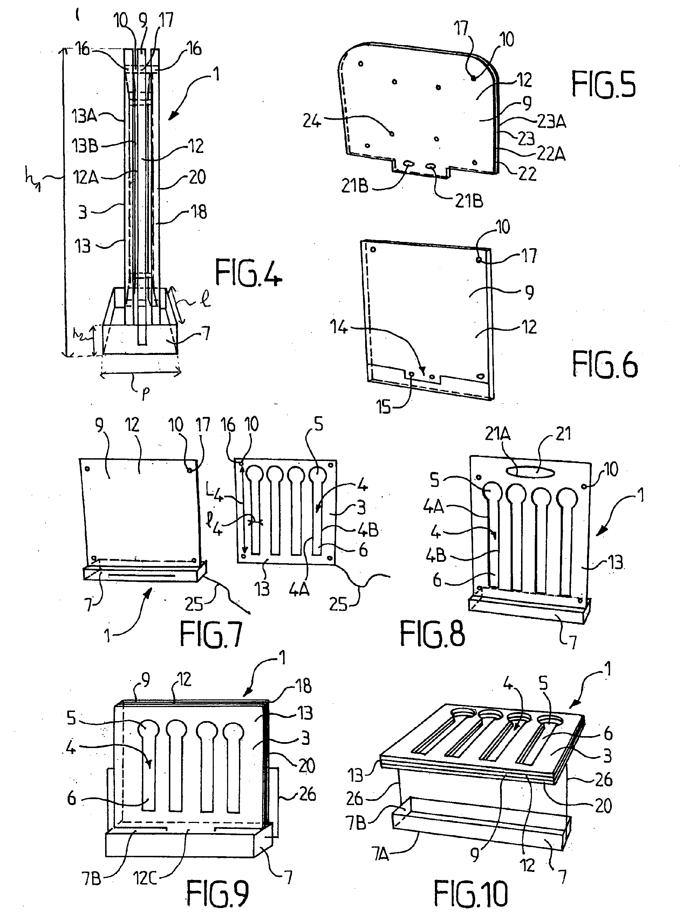

Avantageusement, au niveau du deuxième espace de retenue 6, les deux bords latéraux 4A, 4B de la première fente de retenue 4 sont conçus pour retenir ladite au moins une capsule 2 de telle sorte que le premier élément de présentation 3 puisse être positionné soit dans la première position de présentation dans laquelle il s'étend de manière sensiblement perpendiculaire au support 8 (cf. figures 3, 4, 8 et 9), soit dans une deuxième position de présentation dans laquelle il s'étend de manière sensiblement parallèle au support 8 (cf. figures 10 et 17), c'est-à-dire en position permettant une fonction plateau de présentation dudit élément de présentation 3. En d'autres termes, les bords latéraux 4A, 4B exercent un effort de retenue suffisante sur ladite capsule 2 pour maintenir cette dernière dans la fente de retenue 4 quand le premier élément de présentation 3 est en position verticale ou horizontale par rapport au support 8.

A cette fin, il est possible qu'au moins un des bords latéraux 4A, 4B du deuxième espace 6 comprenne de préférence au moins un moyen de retenue 40 desdites capsules 2. Le moyen de retenue 40 comprend avantageusement une butée 41, préférentiellement présente au moins à proximité du premier espace 5, le long d'au moins un des bords 4A, 4B, ou de préférence à espace régulier le long d'au moins un de ces bords, afin d'avoir un effet de blocage sur toutes les capsules 2 présentes dans la fente de retenue 4, quel que soit leur nombre (cf. figure 1). La butée 41 est avantageusement réalisée dans un matériau suffisamment souple pour permettre l'introduction et le retrait de ladite capsule 2 de la fente de retenue 4, tout en assurant un maintien suffisant de la capsule 2 pour éviter son éjection intempestive de la fente de retenue 4.

Alternativement, le moyen de blocage comprend au moins une glissière 42 permettant une compression élastique sur lesdites capsules 2, de manière à les bloquer en position dans la fente de retenue 4, sans limiter leur retrait de, ou leur insertion dans cette dernière. Le moyen de blocage forme donc préférentiellement un moyen anti-éjection de la capsule 2 de la fente de retenue 4. Il est également parfaitement envisageable que le moyen de blocage 40 comprenne un système de ventouse (non représenté) amovible qui vient recouvrir le premier espace 5 afin d'éviter la sortie des capsules 2.

Le moyen de blocage 40 comprend avantageusement, selon un autre mode de réalisation, une « *fausse »* capsule (non représentée) réalisée en matière souple, par exemple en mousse ou en caoutchouc, et conçue pour être introduite en force, de manière amovible, dans le deuxième espace 6, après que la dernière capsule 2 ait été introduite, de manière à bloquer les capsules 2 dans la fente de retenue 4.

Le dispositif de présentation 1 comprend également un socle 7 conçu pour reposer de manière stable sur un support 8 et destiné à maintenir le premier élément de présentation 3 dans une première position de présentation, c'est-à-dire dans une position sensiblement verticale par rapport au support 8, telle qu'illustrée à la figure 3. Le socle 7 présente avantageusement la forme d'un parallélépipède (cf. figures 1 à 3) ou d'un tronçon de cylindre (cf. figure 12) et est réalisé dans un matériau suffisamment solide pour supporter le poids de l'ensemble des capsules 2 disposées sur le dispositif de présentation 1. Plus généralement, le socle 7 peut être avantageusement assimilé à une surface de retenue, par exemple à un mur, une étagère, un appareil ménager ou un placard, surface sur laquelle le dispositif de présentation 1 repose et est maintenu, fixé ou attaché à l'aide d'un moyen classique de fixation, tels que des aimants, des vis, de la colle, un adhésif double face, de la patafix®, cette liste n'étant pas exhaustive.

Le socle 7 est avantageusement réalisé dans un matériau résistant, solide et de préférence sensiblement identique à celui des autres éléments constitutifs dudit dispositif de présentation 1. Le socle 7, préférentiellement amovible et facilement déplaçable par l'utilisateur, garantit une tenue optimale dudit dispositif de présentation 1 sur ledit support 8, lequel correspond par exemple à une surface plane comme le sol, une table, un plan de travail ou un meuble.

Le dispositif de présentation 1 comprend également un élément de support 9 conçu pour être relié audit socle 7 et sur lequel est solidarisé de manière amovible ledit premier élément de présentation 3 par au moins un moyen de solidarisation / désolidarisation rapide / désolidarisation rapide 10, de manière à ce que ledit élément de support 9 exerce une fonction de retenue de ladite capsule 2 dans ladite première fente de retenue 4.

En d'autres termes, l'élément de support 9 forme un moyen positif anti-éjection de ladite capsule 2, conçu pour éviter un décrochage intempestif de cette dernière du premier élément de présentation 3, de préférence par appui contre ladite capsule 2, notamment contre ledit opercule 2B (cf. figure 3). Le premier élément de présentation 3 est attaché, fixé ou relié audit élément de support 9, ce dernier ayant un rôle de maintien en position de présentation dudit premier élément de présentation 3, ce rôle pouvant être complémentaire du rôle du moyen de blocage 40 susvisé.

Ainsi, le premier élément de présentation 3 est solidarisé/désolidarisé de manière amovible, c'est-à-dire de façon réversible ou détachable, avec ledit moyen de support 9 par au moins un moyen de solidarisation / désolidarisation rapide. De préférence, le socle 7 et le moyen de support 9 forment un support pour maintenir en position de présentation le premier élément de présentation 3, sur lequel est ménagée la fente de retenue 4 qui contient les capsules 2. Le premier élément de présentation 3 peut avantageusement être alternativement solidarisé au, et désolidarisé du moyen de support 9, c'est-à-dire attaché puis libéré de ce dernier, grâce notamment au moyen de solidarisation / désolidarisation rapide 10.

Le moyen de solidarisation / désolidarisation rapide / désolidarisation rapide 10 permet ainsi avantageusement audit premier élément de présentation 3 d'être facilement et rapidement séparable dudit dispositif de présentation 1, plus particulièrement dudit élément de support 9, par l'utilisateur, à la main et par une simple gestuelle, sans avoir recours à des outils ou une aide extérieurs tels qu'un tournevis.

Le caractère amovible et facilement dissociable de l'élément de présentation 3 de l'élément de support 9, et plus généralement du socle 7 et du dispositif de présentation 1, permet ainsi avantageusement une ergonomie de fonctionnement optimale dudit dispositif de présentation 1 pour l'utilisateur, qui peut présenter facilement les capsules 2 dans différentes positions.

Le dispositif de présentation 1 de l'invention est ainsi préférentiellement d'une part multi-position, grâce à l'amovibilité de l'élément de support 9 et dudit premier élément de présentation 3, et d'autre part pluri-fonction, dans la mesure où il permet à la fois de stocker les capsules 2, de les présenter et de les distribuer.

De manière préférée, le socle 7 comprend une face inférieure 7A en contact avec le support 8 et une face supérieure 7B sur laquelle est ménagée une fente de support 11 (cf. figure 2) qui permet une solidarisation de l'élément de support 9 avec ledit socle 7, de manière à ce que ledit élément de support 9 s'étende selon un axe d'extension principale (YY') sensiblement perpendiculaire à un axe d'extension principale (XX') sensiblement horizontal du socle 7. La fente de support 11 ne couvre avantageusement pas toute la longueur de la face supérieure de la face 7B, tel qu'illustré à la figure 2, de manière à éviter un possible coulissement de l'élément de support 9 sur le socle 7. Toutefois, alternativement, il est possible que la fente 11 s'étende sur toute la longueur de la face supérieure 7A dans le cas où un coulissement est justement recherché. De manière avantageuse, l'élément de support 9 est solidarisé de manière amovible au socle 7, de telle sorte que l'utilisateur peut facilement enlever et repositionner l'élément de support 9 sur le socle 7.

Dans un mode de réalisation particulièrement avantageux, l'élément de support 9 comprend une plaque de support 12 sur laquelle est solidarisé de manière amovible le premier élément de présentation 3. La plaque de support 12 présente préférentiellement une forme géométrique, par exemple une forme de rectangle ou de carré, et s'étend entre un bord supérieur 12A et un bord inférieur 12B. Alternativement, il est parfaitement envisageable que la plaque de support 11 présente une forme différente. La plaque de support 12 présente une longueur L₁ et une largeur l₁ sensiblement comprises entre 10 et 50 cm, de préférence sensiblement comprises entre 10 et 30 cm, de préférence respectivement sensiblement égales à 27 cm et à 21 cm.

De préférence, la plaque de support 12 est destinée à être insérée dans la fente de support 11 du socle 7 au niveau de son bord inférieur 12B. Dès lors, la plaque de support 12 s'étend selon l'axe (YY'), de préférence sensiblement perpendiculaire à l'axe d'extension (XX') du socle 7 (cf. figures 1, 7 et 8). A cet effet, la plaque de support 12 comprend avantageusement un décrochement 12C, réalisé de manière monobloc ou non avec la plaque de support 12 et dont la forme est sensiblement complémentaire de celle de la fente de support 11 (cf. figure 2), de manière à permettre la tenue efficace de la plaque de support 12 sur le socle 7, tout en préservant une largeur l₁ de la plaque de support 12 sensiblement identique à la longueur L₂ du socle 7.

Avantageusement, et en vue d'assurer un maintien stable et fiable de la plaque de support 12 dans la fente de support 11, il est tout à fait possible que le socle 7 et/ou la plaque de support 12 comprennent des moyens de blocage 14 (cf. figure 6). Il peut s'agir par exemple d'un système d'orifices traversant 15, ménagés dans le socle 7 au niveau de la fente de support 11 et sur le décrochement 12C de la plaque de support 12, de préférence selon un axe sensiblement perpendiculaire à l'axe d'extension (XX') du socle 7, lesdits orifices 15 étant associés à des tiges (non représentées) conçues pour être introduites dans lesdits orifices 15.

De manière préférée, ledit premier élément de présentation 3 comprend une première plaque de présentation 13 sur laquelle est ménagée ladite au moins une première fente de retenue 4, laquelle est préférentiellement ménagée dans toute l'épaisseur de ladite plaque de présentation 13 de manière à former une fente 4 traversante. La première plaque de présentation 13 est avantageusement destinée à être solidarisée de manière amovible avec ladite plaque de support 12 par ledit au moins un moyen de solidarisation / désolidarisation rapide 10. Ainsi, la première plaque de présentation 13, qui a une forme préférentiellement géométrique, par exemple rectangulaire ou carrée, est destinée à être reliée ou attachée à la plaque de support 12, de manière à former avec cette dernière un ensemble d'un seul tenant stable.

La première plaque de présentation 13, qui comprend une face avant 13A et une face arrière 13B, est destinée à être positionnée contre l'une des faces avant 12A et arrière 12B de la plaque de support 12, et à être maintenue en position contre ladite face 12A, 12B par le moyen de solidarisation / désolidarisation rapide 10, de manière à ce que la plaque de présentation 13 portant les capsules 2 se trouve au recto ou au verso de ladite plaque de support 12. De préférence, la face arrière 13B de la première plaque de présentation 13 est solidarisée avec la face avant 12A de la plaque de support 12 (cf. figure 4). La première plaque de présentation 13 est conçue pour être avantageusement solidarisée à l'élément de support 9, de préférence à la plaque de support 12, de telle sorte que son axe d'extension principale (ZZ') soit sensiblement parallèle ou perpendiculaire à l'axe d'extension principale (YY') de l'élément de support 9, de préférence de la plaque de support 12. En d'autres termes, la fente de retenue 4 s'étend de manière parallèle ou perpendiculaire à l'axe d'extension principale (YY') de l'élément de support 9, de sorte que les rangées de capsules 2 sont sensiblement verticales ou horizontales.

De manière avantageuse, lesdites plaque de support 12 et première plaque de présentation 13 présentent une forme sensiblement identique (cf. figures 1, 4 et 9).

De préférence, ledit au moins un moyen de solidarisation / désolidarisation rapide 10 forme un moyen de fixation amovible entre lesdites plaque de support 9 et de présentation 13, de manière à assurer un maintien stable et fiable de la plaque de présentation 13 comprenant les capsules 2 sur la plaque de support 9. Le moyen de solidarisation / désolidarisation rapide 10 comprend avantageusement tout système de fixation conçu pour permettre une fixation réversible, par exemple par des moyens d'accouplements sensiblement complémentaires ou par exemple un système de type magnétique (par exemple des aimants), Velcro®, « *clips »* avec une partie mâle et une partie femelle, bande d'adhésif, crochets, vis simples, ...). Ainsi, la position relative desdites plaque de support 9 et de présentation 13 est de préférence facilement ajustable et modulable, grâce audit moyen de solidarisation / désolidarisation rapide 10 qui les relie entre elles de manière parfaitement amovible.

Grâce audit moyen de solidarisation / désolidarisation rapide 10, l'utilisateur peut facilement détacher, au moins partiellement ladite première plaque de présentation 13 de ladite plaque de support 12, par exemple de telle sorte que ladite première plaque de présentation 13 soit retenue seulement par un côté latéral 13A (cf. figure 15) soit au niveau de sa base 13C (cf. figure 16). Ceci rend ledit dispositif de présentation 1 avantageusement ergonomique, facile d'utilisation et ludique.

De préférence, ladite première plaque de présentation 13 et ladite plaque de support 12 sont conçues pour être facilement séparables dudit dispositif de présentation 1, en vue de présenter lesdites capsules 2 sous forme d'un plateau de présentation, tel que cela est illustré à la figure 17.

Le moyen de solidarisation / désolidarisation rapide 10 est avantageusement un système de fixation discret, régulièrement réparti et ordonné sur les plaques de présentation 13 et/ou de support 12, afin qu'au moment de la solidarisation/désolidarisation de ces dernières le moyen de solidarisation / désolidarisation rapide 10 de la plaque de présentation 13 soit superposé, mis en contact et/ou en interaction avec le moyen de solidarisation / désolidarisation rapide 10 de la plaque de support 12.

De préférence, le moyen de solidarisation / désolidarisation rapide 10 permet de ménager un espace entre ladite plaque de support 12 et ladite plaque de présentation 13 (cf. figure 4) de manière à faciliter la manipulation de la plaque de présentation 13. Toutefois, il est alternativement envisageable que les plaques de support 12 et de présentation 13 soient sensiblement plaquées l'une contre l'autre après leur solidarisation.

Dans un mode de réalisation particulièrement préféré, ledit moyen de solidarisation / désolidarisation rapide 10, formant préférentiellement moyen d'accouplement classique, comprend au moins un aimant 16 conçu pour solidariser ledit premier élément de présentation 3 sur ledit élément de support 9, par liaison électromagnétique amovible. De préférence, la plaque de présentation 13 comprend ledit au moins un aimant 16 et est destinée à être solidarisée par liaison électromagnétique sur la plaque de support 12 comprenant au moins un élément ferromagnétique 17, de type entretoise métallique 17 traversant ladite plaque de support 12 (cf. figures 3 et 4) et/ou sur une surface quelconque comprenant une surface ferromagnétique, de manière à ce que les fentes de retenue 4 soient sensiblement parallèles au support 8 ou perpendiculaire à ce dernier.

Alternativement, il est également parfaitement envisageable, sans sortir du cadre de la présente invention, que les plaques de support 12 et de présentation 13 comprennent chacune des aimants 16 ou que la plaque de présentation 13 comprenne des éléments ferromagnétiques 17 conçus pour établir des liaisons électromagnétiques amovibles avec des aimants 16 prévus sur la plaque de support 12. Les aimants 16 et les éléments ferromagnétiques 17 formant entretoises métalliques, avantageusement chacun au nombre de quatre, sont préférentiellement disposés à chaque coin desdites plaques de support 12 et de présentation 13, tel que représenté aux figures 1, 2, 4 et 7.

Ainsi, grâce à la fixation amovible par aimantation, l'utilisateur peut facilement et rapidement détacher la première plaque de présentation 13 qui comprend les capsules 2, en vue de les présenter aux différents utilisateurs (deuxième position de présentation) sous forme d'un plateau de présentation ou en vue de fixer ladite plaque de présentation 13 sur un autre support magnétique.

Dès lors, le moyen de solidarisation / désolidarisation rapide 10 permet de détacher facilement la plaque de présentation 13 du dispositif de présentation 1 et de la fixer sur toute autre surface, par exemple sur un réfrigérateur, sur une surface verticale ou horizontale métallique si le moyen de solidarisation / désolidarisation rapide 10 comprend des aimants, ou sur une paroi de la machine à café dans laquelle la capsule 12 sera utilisée. Cette particularité du dispositif de présentation 1 de l'invention présente l'intérêt de permettre une présentation et un stockage de capsules simple, multi-positions, pratique, rapide et économe en place.

De préférence, la première plaque de présentation 13 comprend au moins deux fentes de retenue 4, de préférence au moins quatre fentes de retenue 4 ménagées à travers toute l'épaisseur de ladite plaque de présentation 13, s'étendant sensiblement parallèlement l'une à l'autre et à un axe d'extension principale (ZZ') de ladite première plaque de présentation 13 (cf. figure 1). Lesdites fentes de retenue 4 sont sensiblement identiques entre elles et ont chacune une capacité de stockage de capsules 2 comprise entre 1 et 30, de préférence comprise entre 2 à 15, de préférence égale à 6.

Ainsi, dans un mode de réalisation préféré, la première plaque de présentation 13 comprend quatre fentes de retenue 4 conçues pour contenir chacune jusqu'à 6 capsules 2.

Toutefois et de manière alternative au mode préféré susvisé, il est tout à fait envisageable que les fentes de retenue 4 soient présentes en nombre différent, dans une orientation variable les unes par rapport aux autres et/ou avec formes variées entre elles, par exemple dans le cas où différents types de capsules 2 sont à stocker (cf. figures 13).

De manière avantageuse, le dispositif de présentation 1 de l'invention comprend au moins un deuxième élément de présentation 18, sensiblement identique ou non au premier élément de présentation 3, et comprenant au moins une deuxième fente de retenue 19 sensiblement identique ou non à la première fente de retenue 4. Le deuxième élément de présentation 18 est destiné à être solidarisé de manière amovible avec ledit élément de support 9 par ledit au moins un moyen de solidarisation / désolidarisation rapide 10, c'est-à-dire à être relié, attaché ou fixé à ce dernier par une liaison réversible que l'utilisateur peut facilement faire ou défaire, afin d'attacher et de détacher à souhait ledit deuxième élément de présentation 18.

De préférence, le deuxième élément de présentation 18 présente les mêmes propriétés que celles du premier élément de présentation 3, telles qu'exposées ci-avant.

Le deuxième élément de présentation 18 comprend préférentiellement une deuxième plaque de présentation 20 sur laquelle est ménagée ladite au moins une deuxième fente de retenue 19 conçue pour retenir ladite au moins une capsule 2. La deuxième plaque de présentation 20 est avantageusement sensiblement identique à la première plaque de présentation 12.

Dans un mode de réalisation particulièrement préféré, la deuxième plaque de présentation 20 comprend au moins deux deuxièmes fentes de retenue 19, de préférence quatre fentes de retenue 19, chacune d'entre elles étant conçue pour recevoir et maintenir au moins une capsule 2, de préférence entre cinq et dix capsules 2, avantageusement jusqu'à six capsules 2. Ainsi, les première et deuxième plaques de présentation 13, 20 sont avantageusement ajourées en raison de la présente des fentes de retenue 4, 19 traversantes.

Préférentiellement, les deuxièmes fentes de retenue 19 sont soit sensiblement identiques aux premières fentes de retenue 4 dans le cas par exemple où toutes les capsules 2 sont identiques, soit sensiblement différentes desdites premières fentes de retenue 4 dans le cas où les capsules 2 sont différentes d'une plaque de présentation 13, 20 à l'autre. Il est également parfaitement envisageable, sans sortir du cadre de la présente invention, et tel que représenté par exemple aux figures 13 et 16, que les fentes 4, 19 soient différentes entre chacune des plaques de présentation 13,20 mais également sur chacune desdites plaques de présentation 13, 20, en vue notamment de présenter des capsules 2 de nature différente sur chacune desdites plaques de présentation 13, 20.

De préférence, lesdites première et deuxième plaques de présentation 13, 20 sont destinées à être solidarisées de manière amovible sur ladite plaque de support 12 par ledit au moins un moyen de solidarisation / désolidarisation rapide 10, de part et d'autre de cette dernière, de manière à ce que la plaque de support 12 exerce la fonction de retenue respectivement sur chacune des capsules 2 retenues sur chacune desdites première et deuxième plaques de présentation 13, 20, afin d'éviter l'éjection desdites capsules 2 hors desdites première et deuxième fentes de retenue 4, 19.

En d'autres termes, lesdites première et deuxième plaques de présentation 13, 20 sont ainsi avantageusement déplaçables et détachables facilement de ladite plaque de support 12, par simple gestuelle de l'utilisateur, sans outil, de sorte que leur positionnement sur le dispositif de présentation 1 et/ou sur une autre surface soit modulable à souhait par l'utilisateur (cf. figures 15 et 16). Il est d'ailleurs tout à fait possible d'utiliser les plaques de présentation 13, 20 dans plusieurs sens, de telle sorte que les fentes de retenue 4, 19 soient orientées sensiblement parallèlement ou perpendiculairement audit axe d'extension (YY'). Lesdites première et deuxième plaques de présentation 13, 20 ont préférentiellement une forme sensiblement identique à celle de ladite plaque de support 12. Les plaques de présentation 13,20 sont également conçues pour recouvrir, au moins en partie, respectivement chacune des faces 12A, 12B de ladite plaque de support 12, de manière à former avec cette dernière un ensemble d'un seul tenant maintenu par ledit moyen de solidarisation / désolidarisation rapide 10, tel qu'illustré aux figures 3 et 4.

Dans un mode de réalisation particulièrement préféré, chaque plaque de présentation 13, 20 est pourvue de quatre fentes de retenue 4, 19, pouvant chacune recevoir jusqu'à six capsules 2, de sorte que le dispositif de présentation 1 permet de présenter quarante huit (48) capsules 2. Il est toutefois parfaitement envisageable que ce dispositif 1 permette de présenter un nombre inférieur ou supérieur de capsules 2, dont la nature peut être différente (par exemple thé, lait et café) sur une même plaque de présentation 13, 20 et/ou entre les plaques présentation 13, 20. Ce dispositif de présentation 1 permet une présentation des capsules 2 de part et d'autre de la plaque de support 12 formant élément central, c'est-à-dire au recto et au verso de cette dernière.

En d'autres termes et de manière avantageuse, la plaque de support 12 est en quelque sorte interposée entre lesdites première et deuxième plaques de présentation 13, 20, et permet par des moyens de solidarisation 10 simples, par exemple de type aimants, bandes d'adhésif, vis, Velcro® ou autre fixation amovible, disposés régulièrement sur les trois plaques 12, 13, 20, de maintenir lesdites première et deuxième plaques de présentation 13, 20 en position de présentation stable et fiable des capsules 2, de part et d'autre de ladite plaque de support 12.

Ainsi, en raison des liaisons amovibles qui lient les plaques de présentation 13, 20 à la plaque de support 12, l'utilisateur peut facilement détacher au moins l'une des plaques de présentation 13, 20, ensemble ou non avec ladite plaque de support 12, pour faciliter la présentation des capsules 2, par exemple selon la deuxième position de présentation horizontale. En outre, il est également possible de manière simple et rapide de détacher au moins l'une des plaques de présentation 13, 20 pour la fixer sur un support horizontal ou vertical, différent de la plaque de support 12, par exemple sur un réfrigérateur, un plan de travail, un mur de cuisine, la paroi d'une machine à café, dans l'habitacle de véhicules de loisirs de type camping-cars, ...

Ainsi, les éléments constitutifs dudit dispositif de présentation 1, à savoir notamment lesdites plaques de présentation 13, 20 et ladite plaque de support 12 sont détachables, interchangeables et repositionnables, les unes par rapport aux autres, très facilement, sans l'aide d'outils extérieurs, en toute simplicité, par l'utilisateur, de telle sorte que ce dispositif de présentation 1 forme de manière surprenante et inattendue un dispositif modulaire, multifonction et multi-position.

Par ailleurs, au moins l'un des éléments choisis parmi : l'élément de support 9 et/ou ledit au moins un premier élément de présentation 13 et/ou ledit au moins un deuxième élément de présentation 18 comprend au moins une ouverture de préhension 21 conçue pour faciliter la préhension par l'utilisateur dudit élément de support 12 et/ou dudit premier élément de présentation 13 et/ou dudit deuxième élément de présentation 18.

De préférence, l'ouverture 21 est une ouverture supérieure 21A (cf. figure 8) dans laquelle l'utilisateur peut introduire plusieurs doigts ou plusieurs ouvertures inférieures 21 B (cf. figure 5) dans chacune desquelles l'utilisateur peut introduire un doigt. Ladite ouverture supérieure 21A ou lesdites ouvertures inférieures 21B sont avantageusement ménagées à différents endroits de l'élément de support 9 et/ou dudit au moins un premier élément de présentation 13 et/ou dudit au moins un deuxième élément de présentation 18. Par exemple, ladite ouverture 21 est ménagée le long d'au moins un des bords latéraux desdits éléments susmentionnés, de préférence le long des bords inférieur et/ou supérieur de ces derniers (cf. figures 5 et 8).

De manière avantageuse, l'ensemble comprenant le socle 7, les plaques de présentation 13, 20 et la plaque de support 12 forme la majeure partie du dispositif de présentation 1 de l'invention est présente, une fois assemblé, les dimensions suivantes (cf. figure 4} : une hauteur totale h₁ comprise entre sensiblement 100 et 500 mm, de préférence égale à sensiblement 250 mm ou 290 mm, une hauteur du socle 7 h₂ comprise entre sensiblement 5 et 100 mm, de préférence égale à sensiblement 25 mm ou 30 mm, une largeur l comprise entre sensiblement 100 et 500 mm, de préférence égale à sensiblement 210 mm et une profondeur p comprise entre sensiblement 10 et 100 mm, de préférence égale à sensiblement 70 mm. Dans un mode de réalisation particulièrement préféré de l'invention, chaque plaque de présentation 13, 20 comprend 4 fentes 4, 19, lesquelles ont chacune une capacité de stockage maximale de 5 ou 6 capsules 2, de sorte qu'elles comprennent chacune au maximum 20 ou 24 capsules 2.

De manière préférée, les plaques de présentation 13, 20 ainsi que le socle 7 et la plaque de support 12 sont réalisés dans un matériau résistant, capable de supporter le poids des capsules et présentant une rigidité et une solidité lui permettant de conserver une tenue propre, par exemple en matière plastique, en matière végétale (par exemple en bois), en pierre, en verre, en métal (fer, ...), en aluminium, en verre acrylique ou en tout autre matériau présentant les propriétés susvisées.

Le dispositif de présentation 1, notamment les plaques de présentation 13, 20, le socle 7 et la plaque de support 12, est avantageusement réalisé en matière plastique transparente ou translucide, de préférence en verre acrylique, par exemple en verre acrylique cristal incolore, qui permet une transparence totale contrastant avantageusement avec les couleurs des capsules 2.

Alternativement, dans un mode de réalisation avantageux, le dispositif de présentation 1 est réalisé à partir d'au moins un matériau recyclable et/ou biosourcé, de préférence à partir de végétaux (par exemple de bois), de marc (par exemple de café et/ou de thé) et/ou d'aluminium recyclé, par exemple à partir d'un matériau naturel et/ou biodégradable. De préférence, il est recyclable à 100%. Dans un mode de réalisation particulièrement avantageux, ledit dispositif 1, ou au moins l'un de ces principaux éléments, est fabriqué à partir d'un matériau comprenant entre 30 et 70% de marc (par exemple de café et/ou de thé) et entre 30 et 70% de dérivés de végétaux récupérés, par exemple à partir de la matière KTlène^{™}.

Le matériau constitutif du dispositif de présentation 1 de l'invention peut varier d'un élément à l'autre. Il est en effet parfaitement envisageable que chacun des éléments dudit dispositif de l'invention 1, en particulier chacun desdits plaques de présentation 13, 20, plaque de support 12 et socle 7, soit réalisé dans un matériau différent ; on préférera notamment une combinaison du verre acrylique et de la matière KTlène^{™}.

De manière avantageuse, le dispositif de présentation 1 de l'invention est conçu pour être facilement nettoyable, par exemple sous l'eau à la main par l'utilisateur ou dans un lave-vaisselle. Dans ce dernier cas, le dispositif 1 peut ou non être désassemblé pour être introduit dans le lave-vaisselle, son matériau constitutif étant capable de résister à des températures et des taux d'humidité élevés.

Il est également possible que le matériau constitutif du dispositif de présentation 1 soit teinté, décoré ou coloré, ou que des motifs décoratifs, des inscriptions, des gravures ou tout type de décors soient apposés sur l'un des éléments constitutifs du dispositif 1, par exemple dans un but esthétique, pratique et/ou informatif.

A ce titre, le dispositif de présentation 1 peut comprendre différentes options exposées ci-après, notamment pour le rendre plus pratique pour l'utilisateur et/ou plus esthétique.

Par exemple, il est parfaitement envisageable, sans sortir du cadre de la présente invention qu'au moins l'un des éléments choisis parmi les plaques de présentation 13, 20, le socle 7 et la plaque de support 12, soit préférentiellement recouvert au moins en partie par un adhésif à effet miroir ou à effet décoratif, par un matériau permettant une écriture effaçable ou par un matériau ferromagnétique conçu pour retenir les aimants.

Dans un mode de réalisation alternatif, la plaque de support 12 peut comprendre de manière avantageuse au moins deux plaques maintenues l'une contre l'autre 22, 23 (cf. figure 3), de manière à permettre l'insertion d'un document de type visuel, entre les deux plaques 22, 23, par exemple une photo ou un document 50 tel qu'illustré à la figure 15. De préférence, lesdites plaques 22, 23 sont assemblées par un moyen de fixation quelconque, par exemple par un système magnétique, par soudure ou par collage, ou repliées, sur au moins une partie de leur bord latéral 22A, 23A.

De préférence, le dispositif 1 présente des caractéristiques esthétiques dans la mesure où il peut être décoré de manière facile, personnalisable, rapide et interchangeable par l'utilisateur, lequel peut par exemple selon ses envies et ses goûts apposer ou mettre sur/dans le dispositif 1 des photos ou des décorations. Dans un autre mode de réalisation alternatif, la plaque de support 12 comprend au moins un moyen de suspension 24, de préférence quatre, conçu pour suspendre, fixer ou solidariser ladite plaque de support 12 à un support 8 situé en hauteur, par exemple un plafond ou un caisson de bar (cf. figures 1 et 2). Dans ce mode de réalisation, la plaque de support 12 est fixée, de manière réversible ou non, en position sensiblement horizontale à un plafond, par les moyens de suspension 24, qui sont par exemple de type vis, bandes adhésives, colle, aimants .... De préférence, la première plaque de présentation 13 est solidarisée de manière amovible à ladite plaque de support 12, de manière à permettre une présentation sensiblement horizontale et en hauteur de ladite capsule 2.

Il est également parfaitement envisageable que le dispositif de présentation 1 de l'invention comprenne au moins un moyen d'éclairage 25 conçu pour être intégré audit élément de support 9 et/ou audit socle 7 et/ou audit élément de présentation 3, 18. Dans ce mode de réalisation, le moyen d'éclairage 25 comprend par exemple un système de LED intégré ou rapporté sur l'un des éléments constitutifs du dispositif 1, de manière à favoriser l'éclairage esthétique et pratique des capsules 2. Le moyen d'éclairage comprend avantageusement un système de mini-batteries, pourvues préférentiellement d'un système de rechargement par l'énergie solaire, ou un branchement électrique classique ou un système de batteries classiques, par exemple de type piles (cf. figure 7).

Un tel moyen d'éclairage 25 présente l'intérêt de mettre avantageusement en valeur le dispositif de présentation 1, qui devient avantageusement un objet de décoration, de favoriser le contraste entre les différents types de capsules 2 selon leur couleur ou leur décor extérieur, de mettre en valeur les décors, gravures ou motifs présents sur les différents éléments du dispositif 1 et de garantir une meilleure identification des capsules 2 pour l'utilisateur.

En outre, le dispositif de présentation 1 comprend, dans un autre mode de réalisation avantageux, au moins un moyen de mise en rotation du socle 7, de manière à ce que l'élément de présentation 3, 18, solidarisé audit élément de support 12, lui-même relié au socle 7, soit destiné à être mis en rotation. Le moyen de mise en rotation permet de mettre en mouvement le socle 7, de telle sorte que les plaques de présentation 13, 20 tournent, de préférence autour de l'axe d'extension principale (YY') de la plaque de support 12, c'est-à-dire de préférence dans le sens de rotation indiqué par l'une des flèches A et B représentées à la figure 12, ce qui présente l'intérêt d'une part de mieux identifier les capsules 2 retenues sur le dispositif 1 de chaque côté de ce dernier, et d'autre part d'être particulièrement esthétique.

Le dispositif de présentation 1 de l'invention comprend également avantageusement, dans un mode de réalisation particulier, au moins un moyen de basculement 26 de l'élément de support 12 par rapport audit socle 7, ledit moyen de basculement 26 étant conçu pour faire passer l'élément de présentation 3, 18 d'une position de présentation verticale à une position de présentation horizontale. En d'autres termes, tel qu'illustré aux figures 9 et 10, le moyen de basculement 26 impartit à la plaque de support 12, sur laquelle est solidarisée au moins une plaque de présentation 13, 20, un mouvement de bascule qui présente l'intérêt d'obtenir rapidement et simplement deux positions stables de présentation des capsules 2.

Au moins l'une des plaques de présentation 13, 20 peut en outre être avantageusement utilisées comme ustensile de cuisine pour la confection alimentaire, par exemple pour la préparation de gâteaux. Dans ce mode de réalisation, les fentes de retenue 4 de la plaque de présentation 13, 20 forment un moule à pâtisserie que l'on applique avantageusement sur une pâte étalée au préalable sur un support. La forme de la fente de retenue 4 permet de délimiter les contours d'une première partie en forme sensiblement de disque correspondant au premier espace évasé 5 de la fente de retenue 4, et d'une deuxième partie sensiblement rectangulaire correspondant au deuxième espace 6 de retenue de la fente de retenue 4. Une fois séparées du reste de la pâte, ces deux parties sont assemblées de manière à réaliser une tasse à café avec une soucoupe, puis cuites.

Dans un mode de réalisation avantageux, il est également envisageable que le dispositif de présentation 1 de l'invention constitue, en plus de sa fonction de présentation, de distribution et de stockage de capsules 2, un dispositif ludique, de type jeu de société, par exemple de type « *Puissance* 4® » ou « *Bataillé navale* », ... Dans ces exemples de jeux, l'objectif est d'aligner ou de positionner de manière précise des pions, ici remplacés par des capsules 2 disposées de part et d'autre de la plaque de support 12, de même couleur ou de même forme.

Les différents modes de réalisation décrits précédemment peuvent avantageusement être mis en oeuvre conjointement ou non sur le dispositif de présentation 1 de la présente invention.

Le dispositif de présentation 1 de l'invention présente l'avantage de garantir une grande modularité de présentation des capsules 2, en permettant de solidariser et de désolidariser à souhait, de manière simple, rapide et esthétique, les plaques de présentation 13, 20 et/ou la plaque de support 12. En outre, il permet de fixer facilement, par liaisons amovibles et solides, les plaques de présentation 13, 20 des capsules 2 sur différents types de support et dans différentes positions (horizontale, verticale), ce qui garantit de surcroît une économie de place puisqu'il comprend plusieurs plaques superposées les une aux autres, détachables les unes des autres, et permettant de disposer les capsules 2 sur deux faces de présentation.

La présente invention concerne également un procédé de présentation d'au moins une capsule 2 destinée à être saisie par un utilisateur et contenant un produit alimentaire destiné à la consommation humaine. Le procédé de l'invention met en oeuvre un dispositif de présentation 1 comprenant au moins un premier élément de présentation 3 conçu pour retenir ladite capsule 2. De préférence, ce dispositif 1 est sensiblement identique à celui détaillé ci-avant.

Le premier élément de présentation 3 comprend au moins une première fente de retenue 4 définie par deux bords latéraux 4A, 4B qui délimitent un premier espace 5 évasé d'introduction au niveau duquel on introduit ladite capsule 2 et un deuxième espace 6 de retenue de ladite capsule 2. Le deuxième espace 6 de retenue présente des dimensions sensiblement inférieures à celles du premier espace 5 évasé, afin que ladite capsule 2 soit maintenue, après son introduction, entre lesdits deux bords latéraux 4A, 4B du deuxième espace 6 de retenue.

Le dispositif de présentation 1 comprend également un socle 7 conçu pour reposer de manière stable sur un support 8 et destiné à maintenir le premier élément de présentation 3 dans une première position de présentation. Le procédé de présentation comprend une étape de liaison d'un élément de support 9 audit socle 7 et une étape de solidarisation amovible du premier élément de présentation 3 sur ledit élément de support 9 par au moins un moyen de solidarisation / désolidarisation rapide 10, de manière à ce que ledit élément de support 9 exerce une fonction de retenue de ladite capsule 2 dans ladite première fente de retenue 4.

Ce procédé de présentation présente l'intérêt de permettre une présentation fiable, rapide, pratique, esthétique et modulable des capsules 2.

### POSSIBILITE D'APPLICATION INDUSTRIELLE

L'invention trouve son application industrielle dans la conception et la fabrication de dispositifs de présentation d'objets de la vie courante, en particulier de capsules pour boissons.

## Revendications

1. Dispositif de présentation (1) d'au moins une capsule (2) destinée à être saisie par un utilisateur et contenant un produit alimentaire destiné à la consommation humaine, ledit dispositif de présentation (1) comprenant au moins un premier élément de présentation (3) conçu pour retenir ladite capsule (2), ledit premier élément de présentation (3) comprenant au moins une première fente de retenue (4) définie par deux bords latéraux (4A, 4B) qui délimitent un premier espace (5) évasé d'introduction de ladite capsule (2) et un deuxième espace (6) de retenue de ladite capsule (2), ledit deuxième espace (6) de retenue présentant des dimensions sensiblement inférieures à celles du premier espace (5) évasé, afin que ladite capsule (2) soit maintenue, après son introduction, entre lesdits deux bords latéraux (4A, 4B) du deuxième espace (6) de retenue, ledit dispositif de présentation (1) comprenant également un socle (7) conçu pour reposer de manière stable sur un support (8) et destiné à maintenir le premier élément de présentation (3) dans une première position de présentation, ledit dispositif de présentation (1) étant **caractérisé en ce qu'**il comprend un élément de support (9) conçu pour être relié audit socle (7) et sur lequel est solidarisé de manière amovible ledit premier élément de présentation (3) par au moins un moyen de solidarisation / désolidarisation rapide (10), de manière à ce que ledit élément de support (9) exerce une fonction de retenue de ladite capsule (2) dans ladite première fente de retenue (4).

2. Dispositif de présentation (1) selon la revendication 1 **caractérisé en ce qu'**au niveau du deuxième espace (6) de retenue, les deux bords latéraux (4A, 4B) de la première fente de retenue (4) sont conçus pour retenir ladite au moins une capsule (2) de telle sorte que le premier élément de présentation (3) puisse être positionné soit dans la première position de présentation dans laquelle il s'étend de manière sensiblement perpendiculaire au support (8), soit dans une deuxième position de présentation dans laquelle il s'étend de manière sensiblement parallèle au support (8).

3. Dispositif de présentation (1) selon la revendication 1 ou 2 **caractérisé en ce que** le socle (7) comprend une face inférieure (7A) en contact avec le support (8) et une face supérieure (7B) sur laquelle est ménagée une fente de support (11) qui permet une solidarisation de l'élément de support (9) avec ledit socle (7), de manière à ce que ledit élément de support (9) s'étende selon un axe d'extension principale (YY') sensiblement perpendiculaire à un axe d'extension principale (XX') sensiblement horizontal du socle (7).

4. Dispositif de présentation (1) selon l'une des revendications 1 à 3 **caractérisé en ce que** l'élément de support (9) comprend une plaque de support (12) sur laquelle est solidarisé de manière amovible le premier élément de présentation (3).

5. Dispositif de présentation (1) selon la revendication 4 **caractérisé en ce que** ledit premier élément de présentation (3) comprend une première plaque de présentation (13) sur laquelle est ménagée ladite au moins une première fente de retenue (4), ladite première plaque de présentation (13) étant destinée à être solidarisée de manière amovible avec ladite plaque de support (12) par ledit au moins un moyen de solidarisation / désolidarisation rapide (10).

6. Dispositif de présentation (1) selon la revendication 5 **caractérisé en ce que** ladite première plaque de présentation (13) et ladite plaque de support (12) sont conçues pour être facilement séparables dudit dispositif de présentation (1), en vue de présenter lesdites capsules (2) sous forme d'un plateau de présentation.

7. Dispositif de présentation (1) selon l'une des revendications 1 à 6 **caractérisé en ce que** ledit au moins un moyen de solidarisation / désolidarisation rapide (10) comprend au moins un aimant (16) conçu pour solidariser ledit premier élément de présentation (3) sur ledit élément de support (12), par liaison électromagnétique amovible.

8. Dispositif de présentation (1) selon l'une des revendications 5 et 6 et la revendication 7 **caractérisé en ce que** la première plaque de présentation (13) comprend ledit au moins un aimant (16) et est destinée à être solidarisée par liaison électromagnétique sur la plaque de support (12) comprenant au moins un élément ferromagnétique (17) et/ou sur une surface quelconque comprenant une surface ferromagnétique.

9. Dispositif de présentation (1) selon la revendication 5 **caractérisé en ce que** la première plaque de présentation (13) comprend au moins deux fentes de retenue (4) s'étendant sensiblement parallèlement l'une à l'autre et à un axe d'extension principale (ZZ') de ladite première plaque de présentation (13), laquelle est conçue pour être solidarisée à la plaque de support (12) de telle sorte que son axe d'extension principale (ZZ') soit sensiblement parallèle ou perpendiculaire à l'axe d'extension principale (YY') de la plaque de support (12).

10. Dispositif de présentation (1) selon l'une des revendications 1 à 9 **caractérisé en ce qu'**il comprend au moins un deuxième élément de présentation (18), sensiblement identique au premier élément de présentation (3), comprenant au moins une deuxième fente de retenue (19), ledit deuxième élément de présentation (18) étant destiné à être solidarisé de manière amovible avec ledit élément de support (9) par ledit au moins un moyen de solidarisation / désolidarisation rapide (10).

11. Dispositif de présentation (1) selon les revendications 5 et 10 **caractérisé en ce que** le deuxième élément de présentation (18) comprend une deuxième plaque de présentation (20) sur laquelle est ménagée ladite au moins une deuxième fente de retenue (19) conçue pour retenir ladite au moins une capsule (2), lesdites première et deuxième plaques de présentation (13, 20) étant destinées à être solidarisées de manière amovible sur ladite plaque de support (12) par ledit au moins un moyen de solidarisation / désolidarisation rapide (10), de part et d'autre de cette dernière, de manière à ce que la plaque de support (12) exerce la fonction de retenue respectivement sur chacune des capsules (2) retenues sur chacune desdites première et deuxième plaques de présentation (13, 20), afin d'éviter l'éjection desdites capsules (2) hors desdites première et deuxième fentes de retenue (4, 19).

12. Dispositif de présentation (1) selon la revendication 11 **caractérisé en ce que** lesdites première et deuxième plaques de présentation (13, 20) ont une forme sensiblement identique à celle de ladite plaque de support (12) et sont conçues pour recouvrir, au moins en partie, respectivement chacune des faces (12A, 12B) de ladite plaque de support (12), de manière à former avec cette dernière un ensemble d'un seul tenant maintenu par ledit moyen de solidarisation / désolidarisation rapide (10).

13. Dispositif de présentation (1) selon la revendication 10 et l'une des revendications 1 à 12 **caractérisé en ce qu'**au moins l'un des éléments choisis parmi : l'élément de support (9), ledit au moins un premier élément de présentation (3) et ledit au moins un deuxième élément de présentation (18) comprend au moins une ouverture de préhension (21) conçue pour faciliter la préhension par l'utilisateur dudit élément de support (9) et/ou dudit premier élément de présentation (3) et/ou dudit deuxième élément de présentation (18).

14. Dispositif de présentation (1) selon l'une des revendications 1 à 13 **caractérisé en ce qu'**il comprend au moins un moyen de mise en rotation du socle, de manière à ce que l'élément de présentation (3), solidarisé audit élément de support (9) lui-même relié au socle (7), soit destiné à être mis en rotation.

15. Dispositif de présentation (1) selon l'une des revendications 1 à 14 **caractérisé en ce qu'**il comprend au moins un moyen d'éclairage (25) conçu pour être intégré audit élément de support (9) et/ou audit socle (7) et/ou audit élément de présentation (3).

16. Dispositif de présentation (1) selon l'une des revendications 1 à 15 **caractérisé en ce qu'**il comprend au moins un moyen de basculement (26) de l'élément de support (9) par rapport audit socle (7), ledit moyen de basculement (26) étant conçu pour faire passer l'élément de présentation (3) d'une position de présentation verticale à une position de présentation horizontale.

17. Dispositif de présentation (1) selon l'une des revendications 1 à 16 **caractérisé en ce qu'**il constitue un dispositif de présentation et de distribution d'une pluralité de capsules (2) destinées à la réalisation de boissons consommables.

18. Dispositif de présentation (1) selon l'une des revendications 1 à 17 **caractérisé en ce qu'**il est réalisé en matière plastique transparente, de préférence en verre acrylique.

19. Dispositif de présentation (1) selon l'une des revendications 1 à 17 **caractérisé en ce qu'**il est réalisé à partir d'au moins un matériau recyclable et/ou biosourcé, de préférence à partir de végétaux, de marc et/ou d'aluminium recyclé.

20. Procédé de présentation d'au moins une capsule (2) destinée à être saisie par un utilisateur et contenant un produit alimentaire destiné à la consommation humaine, ledit procédé mettant en oeuvre un dispositif de présentation (1) comprenant au moins un premier élément de présentation (3) conçu pour retenir ladite capsule (2), ledit premier élément de présentation (3) comprenant au moins une première fente de retenue (4) définie par deux bords latéraux (4A, 4B) qui délimitent un premier espace (5) évasé d'introduction au niveau duquel on introduit ladite capsule (2) et un deuxième espace (6) de retenue de ladite capsule (2), ledit deuxième espace (6) de retenue présentant des dimensions sensiblement inférieures à celles du premier espace (5) évasé, afin que ladite capsule (2) soit maintenue, après son introduction, entre lesdits deux bords latéraux (4A, 4B) du deuxième espace (6) de retenue, ledit dispositif de présentation (1) comprenant également un socle (7) conçu pour reposer de manière stable sur un support (8) et destiné à maintenir le premier élément de présentation (3) dans une première position de présentation, ledit procédé de présentation étant **caractérisé en ce qu'**il comprend une étape de liaison d'un élément de support (9) audit socle (7) et une étape de solidarisation amovible du premier élément de présentation (3) sur ledit élément de support (9) par au moins un moyen de solidarisation / désolidarisation (10), de manière à ce que ledit élément de support (9) exerce une fonction de retenue de ladite capsule (2) dans ladite première fente de retenue (4).

## Patentansprüche

1. Vorrichtung zur Präsentation (1) mindestens einer Kapsel (2), die dazu bestimmt ist, von einem Benutzer erfasst zu werden, und ein Nahrungsmittel enthält, das für den Konsum durch den Menschen bestimmt ist, wobei die Präsentationsvorrichtung (1) mindestens ein erstes Präsentationselement (3) umfasst, das dazu vorgesehen ist, die Kapsel (2) zu halten, wobei das erste Präsentationselement (3) mindestens einen ersten Halteschlitz (4) umfasst, der von zwei Seitenrändern (4A, 4B) definiert ist, die einen ersten erweiterten Raum (5) für die Einführung der Kapsel (2) und einen zweiten Raum (6) zum Halten der Kapsel (2) begrenzen, wobei der zweite Halteraum (6) im Wesentlichen kleinere Abmessungen als der erste erweiterte Raum (5) aufweist, damit die Kapsel (2) nach ihrer Einführung zwischen den beiden Seitenrändern (4A, 4B) des zweiten Halteraums (6) gehalten wird, wobei die Präsentationsvorrichtung (1) auch einen Sockel (7) umfasst, der derart vorgesehen ist, dass er stabil auf einem Träger (8) steht, und dazu bestimmt ist, das erste Präsentationselement (3) in einer ersten Präsentationsposition zu halten, wobei die Präsentationsvorrichtung (1) **dadurch gekennzeichnet ist, dass** sie ein Stützelement (9) umfasst, das derart vorgesehen ist, dass es mit dem Sockel (7) verbunden wird, und auf dem abnehmbar das erste Präsentationselement (3) durch mindestens ein Schnellmontage-/-demontagemittel (10) befestigt ist, so dass das Stützelement (9) eine Haltefunktion der Kapsel (2) in dem ersten Halteschlitz (4) ausübt.

2. Präsentationsvorrichtung (1) nach Anspruch 1, **dadurch gekennzeichnet, dass** im Bereich des zweiten Halteraums (6) die beiden Seitenränder (4A, 4B) des ersten Halteschlitzes (4) derart vorgesehen sind, dass sie die mindestens eine Kapsel (2) derart halten, dass das erste Präsentationselement (3) entweder in der ersten Präsentationsposition, in der es sich im Wesentlichen senkrecht auf den Träger (8) erstreckt, oder in einer zweiten Präsentationsposition, in der es sich im Wesentlichen parallel zum Träger (8) erstreckt, positioniert werden kann.

3. Präsentationsvorrichtung (1) nach Anspruch 1 oder 2, **dadurch gekennzeichnet, dass** der Sockel (7) eine Unterseite (7A), die mit dem Träger (8) in Kontakt ist, und eine Oberseite (7B) umfasst, auf der ein Halteschlitz (11) ausgenommen ist, der eine Verbindung des Stützelements (9) mit dem Sockel (7) ermöglicht, so dass sich das Stützelement (9) entlang einer Hauptausdehnungsachse (YY') im Wesentlichen senkrecht auf eine im Wesentlichen horizontale Hauptausdehnungsachse (XX') des Sockels (7) erstreckt.

4. Präsentationsvorrichtung (1) nach einem der Ansprüche 1 bis 3, **dadurch gekennzeichnet, dass** das Stützelement (9) eine Stützplatte (12) umfasst, auf der abnehmbar das erste Präsentationselement (3) befestigt ist.

5. Präsentationsvorrichtung (1) nach Anspruch 4, **dadurch gekennzeichnet, dass** das erste Präsentationselement (3) eine erste Präsentationsplatte (13) umfasst, auf der der mindestens eine erste Halteschlitz (4) ausgenommen ist, wobei die erste Präsentationsplatte (13) dazu bestimmt ist, abnehmbar mit der Stützplatte (12) durch das mindestens eine Schnellmontage-/-demontagemittel (10) verbunden zu sein.

6. Präsentationsvorrichtung (1) nach Anspruch 5, **dadurch gekennzeichnet, dass** die erste Präsentationsplatte (13) und die Stützplatte (12) derart ausgeführt sind, dass sie leicht von der Präsentationsvorrichtung (1) trennbar sind, um die Kapseln (2) in Form einer Präsentationstafel zu präsentieren.

7. Präsentationsvorrichtung (1) nach einem der Ansprüche 1 bis 6, **dadurch gekennzeichnet, dass** das mindestens eine Schnellmontage-/-demontagemittel (10) mindestens einen Magneten (16) umfasst, der dazu vorgesehen ist, das erste Präsentationselement (3) auf dem Stützelement (12) durch lösbare elektromagnetische Verbindung zu befestigen.

8. Präsentationsvorrichtung (1) nach einem der Ansprüche 5 und 6 und Anspruch 7, **dadurch gekennzeichnet, dass** die erste Präsentationsplatte (13) den mindestens einen Magneten (16) umfasst und dazu bestimmt ist, durch elektromagnetische Verbindung an der Stützplatte (12) befestigt zu werden, umfassend mindestens ein ferromagnetisches Element (17) und/oder umfassend eine ferromagnetische Fläche auf einer beliebigen Fläche.

9. Präsentationsvorrichtung (1) nach Anspruch 5, **dadurch gekennzeichnet, dass** die erste Präsentationsplatte (13) mindestens zwei Halteschlitze (4) umfasst, die sich im Wesentlichen parallel zueinander und zu einer Hauptausdehnungsachse (ZZ') der ersten Präsentationsplatte (13) erstrecken, welche derart ausgeführt ist, dass sie mit der Stützplatte (12) derart verbunden wird, dass ihre Hauptausdehnungsachse (ZZ') im Wesentlichen parallel oder senkrecht auf die Hauptausdehnungsachse (YY') der Stützplatte (12) ist.

10. Präsentationsvorrichtung (1) nach einem der Ansprüche 1 bis 9, **dadurch gekennzeichnet, dass** sie mindestens ein zweites Präsentationselement (18) umfasst, das im Wesentlichen mit dem ersten Präsentationselement (3) identisch ist und mindestens einen zweiten Halteschlitz (19) umfasst, wobei das zweite Präsentationselement (18) dazu bestimmt ist, abnehmbar auf dem Stützelement (9) durch mindestens ein Schnellmontage-/-demontagemittel (10) befestigt zu werden.

11. Präsentationsvorrichtung (1) nach den Ansprüchen 5 und 10, **dadurch gekennzeichnet, dass** das zweite Präsentationselement (18) eine zweite Präsentationsplatte (20) umfasst, auf der der mindestens eine zweite Halteschlitz (19), der dazu ausgeführt ist, die mindestens eine Kapsel (2) zu halten, ausgenommen ist, wobei die erste und die zweite Präsentationsplatte (13, 20) dazu bestimmt sind, abnehmbar auf der Stützplatte (12) durch das mindestens eine Schnellmontage-/-demontagemittel (10) beiderseits dieser letztgenannten befestigt zu werden, so dass die Stützplatte (12) die Haltefunktion auf jeder der Kapseln (2), die auf jeder der ersten und zweiten Präsentationsplatten (13, 20) gehalten werden, ausübt, um das Auswerfen der Kapseln (2) aus dem ersten und zweiten Halteschlitz (4, 19) zu vermeiden.

12. Präsentationsvorrichtung (1) nach Anspruch 11, **dadurch gekennzeichnet, dass** die erste und die zweite Präsentationsplatte (13, 20) eine im Wesentlichen identische Form wie jene der Stützplatte (12) haben und derart ausgeführt sind, dass sie zumindest teilweise jeweils jede der Seiten (12A, 12B) der Stützplatte (12) bedecken, um mit dieser letztgenannten eine einstückige Einheit zu bilden, die von dem Schnellmontage-/-demontagemittel (10) gehalten wird.

13. Präsentationsvorrichtung (1) nach Anspruch 10 und einem der Ansprüche 1 bis 12, **dadurch gekennzeichnet, dass** mindestens eines der Elemente, das gewählt wird unter: dem Stützelement (9), dem mindestens einen ersten Präsentationselement (3) und dem mindestens einen zweiten Präsentationselement (18) mindestens eine Greiföffnung (21) umfasst, die derart vorgesehen ist, dass es das Ergreifen des Stützelements (9) und/oder des ersten Präsentationselements (3) und/oder des zweiten Präsentationselements (18) durch den Benutzer erleichtert.

14. Präsentationsvorrichtung (1) nach einem der Ansprüche 1 bis 13, **dadurch gekennzeichnet, dass** sie mindestens ein Mittel zum Drehen des Sockels umfasst, so dass das Präsentationselement (3), das mit dem Stützelement (9) verbunden ist, das selbst mit dem Sockel (7) verbunden ist, dazu bestimmt ist, in Drehung versetzt zu werden.

15. Präsentationsvorrichtung (1) nach einem der Ansprüche 1 bis 14, **dadurch gekennzeichnet, dass** sie mindestens ein Beleuchtungsmittel (25) umfasst, das dazu vorgesehen ist, in das Stützelement (9) und/oder den Sockel (7) und/oder das Präsentationselement (3) integriert zu werden.

16. Präsentationsvorrichtung (1) nach einem der Ansprüche 1 bis 15, **dadurch gekennzeichnet, dass** sie mindestens ein Mittel (26) zum Schwenken des Stützelements (9) in Bezug zum Sockel (7) umfasst, wobei Schwenkmittel (26) derart ausgeführt ist, dass es das Präsentationselement (3) von einer vertikalen Präsentationsposition in eine horizontale Präsentationsposition übergehen lässt.

17. Präsentationsvorrichtung (1) nach einem der Ansprüche 1 bis 16, **dadurch gekennzeichnet, dass** sie eine Vorrichtung zur Präsentation und Verteilung einer Vielzahl von Kapseln (2), die für die Zubereitung von konsumierbaren Getränken bestimmt sind, darstellt.

18. Präsentationsvorrichtung (1) nach einem der Ansprüche 1 bis 17, **dadurch gekennzeichnet, dass** sie aus transparentem Kunststoff, vorzugsweise aus Acrylglas, hergestellt ist.

19. Präsentationsvorrichtung (1) nach einem der Ansprüche 1 bis 17, **dadurch gekennzeichnet, dass** sie aus mindestens einem recycelbaren und/oder biobasierten Material, vorzugsweise aus Pflanzen, Trester und /oder recyceltem Aluminium, hergestellt ist.

20. Verfahren zur Präsentation mindestens einer Kapsel (2), die dazu bestimmt ist, von einem Benutzer erfasst zu werden, und ein Nahrungsmittel enthält, das für den Konsum durch den Menschen bestimmt ist, wobei das Verfahren eine Präsentationsvorrichtung (1) einsetzt, die mindestens ein erstes Präsentationselement (3) umfasst, das dazu vorgesehen ist, die Kapsel (2) zu halten, wobei das erste Präsentationselement (3) mindestens einen ersten Halteschlitz (4) umfasst, der von zwei Seitenrändern (4A, 4B) definiert ist, die einen ersten erweiterten Einführungsraum (5), in dessen Bereich die Kapsel (2) eingeführt wird, und einen zweiten Halteraum (6) zum Halten der Kapsel (2) begrenzen, wobei der zweite Halteraum (6) im Wesentlichen kleinere Abmessungen als der erste erweiterte Raum (5) aufweist, damit die Kapsel (2) nach ihrer Einführung zwischen den beiden Seitenrändern (4A, 4B) des zweiten Halteraums (6) gehalten wird, wobei die Präsentationsvorrichtung (1) auch einen Sockel (7) umfasst, der derart vorgesehen ist, dass er stabil auf einem Träger (8) steht, und dazu bestimmt ist, das erste Präsentationselement (3) in einer ersten Präsentationsposition zu halten, wobei das Präsentationsverfahren **dadurch gekennzeichnet ist, dass** es einen Schritt der Verbindung eines Stützelements (9) mit dem Sockel (7) und einen Schritt der abnehmbaren Befestigung des ersten Präsentationselements (3) auf dem Stützelement (9) durch mindestens ein Schnellmontage-/-demontagemittel (10), so dass das Stützelement (9) eine Haltefunktion der Kapsel (2) in dem ersten Halteschlitz (4) ausübt.

## Claims

1. Device (1) for displaying at least one cartridge (2) intended to be gripped by a user and containing a food product intended for human consumption, said display device (1) comprising at least one first display element (3) designed to hold said cartridge (2), said first display element (3) comprising at least one first holding slot (4) defined by two lateral edges (4A, 4B) that delimit a first splayed space (5) for inserting said cartridge (2) and a second space (6) for holding said cartridge (2), said second holding space (6) having dimensions substantially less than those of the first splayed space (5) so that said cartridge (2) is held, after insertion thereof, between said lateral edges (4A, 4B) of the second holding space (6), said display device (1) also comprising a base (7) designed to rest in a stable fashion on a support (8) and intended to hold the first display element (3) in a first display position, said display device (1) being **characterised in that** it comprises a support element (9) designed so as to be connected to said base (7) and to which said first display element (3) is removably connected by at least one quick connection/disconnection means (10), so that said support element (9) fulfils a function of holding said cartridge (2) in said first holding slot (4).

2. Display device (1) according to claim 1, **characterised in that**, at the second holding space (6), the two lateral edges (4A, 4B) of the first holding slot (4) are designed to hold said at least one cartridge (2) so that the first display element (3) can be positioned either in the first display position in which it extends substantially perpendicular to the support (8), or in a second display position in which it extends substantially parallel to the support (8).

3. Display device (1) according to claim 1 or 2, **characterised in that** the base (7) comprises a bottom face (7A) in contact with the support (8) and a top face (7B) on which a support slot (11) is provided that affords connection of the support element (9) with said base (7), so that said support element (9) extends along a principal extension axis (YY') substantially perpendicular to a substantially horizontal principal extension axis (XX') of the base (7).

4. Display device (1) according to one of claims 1 to 3, **characterised in that** the support element (9) comprises a support plate (12) on which the first display element (3) is removably connected.

5. Display device (1) according to claim 4, **characterised in that** said first display element (3) comprises a first display plate (13) on which said at least one first holding slot (4) is provided, said first display plate (13) being intended to be removably connected to said support plate (12) by said at least one quick connectionldisconnection means (10).

6. Display device (1) according to claim 5, **characterised in that** said first display plate (13) and said support plate (12) are designed so as to be easily separable from said display device (1) with a view to displaying said cartridges (2) in the form of a display tray.

7. Display device (1) according to one of claims 1 to 6, **characterised in that** said at least one quick connection/disconnection means (10) comprises at least one magnet (16) designed to connect said first display element (3) to said support element (12), by removable electromagnetic connection.

8. Display device (1) according to one of claims 5 and 6 and claim 7, **characterised in that** the first display plate (13) comprises said at least one magnet (16) and is intended to be connected by electromagnetic connection to the support plate (12) comprising at least one ferromagnetic element (17) and/or to any surface comprising a ferromagnetic surface.

9. Display device (1) according to claim 5, **characterised in that** the first display plate (13) comprises at least two holding slots (4) extending substantially parallel to each other and to a principal extension axis (ZZ') of said first display plate (13), which is designed to be connected to the support plate (12) so that its principal extension axis (ZZ') is substantially parallel or perpendicular to the principal extension axis (YY') of the support plate (12).

10. Display device (1) according to one of claims 1 to 9, **characterised in that** it comprises at least one second display element (18), substantially identical to the first display element (3), comprising at least one second holding slot (19), said second display element (18) being intended to be connected removably to said support element (9) by said at least one quick connection/disconnection means (10).

11. Display device (1) according to claims 5 and 10, **characterised in that** the second display element (18) comprises a second display plate (20) on which said at least one second holding slot (19) is provided, designed to hold said at least one cartridge (2), said first and second display plates (13, 20) being intended to be removably connected to said support plate (12) by said at least one quick connection/disconnection means (10), on either side of the latter, so that the support plate (12) fulfils the holding function respectively on each of the cartridges (2) held on each of first and second display plates (13, 20), so as to prevent the ejection of said cartridges (2) out of said first and second holding slots (4, 19).

12. Display device (1) according to claim 11, **characterised in that** said first and second display plates (13, 20) have a form substantially identical to that of said support plate (12) and are designed so as to at least partly cover respectively each of the faces (12A, 12B) of said support plate (12) so as to form with the latter a single-piece assembly held by said quick connection/disconnection means (10).

13. Display device (1) according to claim 10 and one of claims 1 to 12, **characterised in that** at least one of the elements chosen from: the support element (9), said at least one first display element (3) and said at least one second display element (18), comprises at least one gripping opening (21) designed to facilitate the gripping by the user of said support element (9) and/or of said first display element (3) and/or of said second display element (18).

14. Display device (1) according to one of claims 1 to 13, **characterised in that** it comprises at least one means for rotating the base so that the display element (3), connected to said support element (9) which is itself connected to the base (7), is intended to be rotated.

15. Display device (1) according to one of claims 1 to 14, **characterised in that** it comprises at least one illumination means (25) designed to be integrated in said support element (9) and/or said base (7) and/or said display element (3).

16. Display device (1) according to one of claims 1 to 15, **characterised in that** it comprises at least one means (26) for tilting the support element (9) with respect to said base (7), said tilting means (26) being designed to make the display element (3) pass from a vertical display position to a horizontal display position.

17. Display device (1) according to one of claims 1 to 16, **characterised in that** it constitutes a device for displaying and dispensing a plurality of cartridges (2) intended for producing consumable drinks.

18. Display device (1) according one of claims 1 to 17, **characterised in that** it is produced from transparent plastics material, preferably made from acrylic glass.

19. Display device (1) according to one of claims 1 to 17, **characterised in that** it is produced from at least one recyclable and/or biosourced material, preferably from plants, marc and/or recycled aluminium.

20. Method for displaying at least one cartridge (2) intended to be gripped by a user and containing a food product intended for human consumption, said method using a display device (1) comprising at least one first display element (3) designed to hold said cartridge (2), said first display element (3) comprising at least one first holding slot (4) defined by two lateral edges (4A, 4B) that delimit a first splayed space (5) where said cartridge (2) is inserted, and a second space (6) for holding said cartridge (2), said second holding space (6) having dimensions substantially less than those of the first splayed space (5) so that said cartridge (2) is held, after insertion thereof, between said lateral edges (4A, 4B) of the second holding space (6), said display device (1) also comprising a base (7) designed to rest in a stable fashion on a support (8) and intended to hold said display element (3) in a first display position, said display method being **characterised in that** it comprises a step of connecting a support element (9) to said base (7) and a step of removable connection of the first display element (3) on said support element (9) by at least one connection/disconnection means (10), so that said support element (9) fulfils a function of holding said cartridge (2) in said first holding slot (4).
